# EUROPEAN PATENT APPLICATION

(11) **EP 3 587 079 A1**
(43) Date of publication of application: **01.01.2020**
(21) Application number: 18180950.0
(22) Date of filing: 29.06.2018
(51) Int. Cl.: B29C 64/273, B33Y 30/00, B33Y 10/00, B29C 64/153, B22F 3/105, B29C 64/40

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Werner, Jürgen, 96215 Lichtenfels (DE)
(74) Representative: Hafner & Kohl Patent- und Rechtsanwälte Partnerschaft mbB

(57) **Abstract**

Apparatus (1) for additively manufacturing three-dimensional objects (2) by means of successive layerwise selective irradiation and consolidation of layers of a build material (4) which can be consolidated by means of an energy beam (9), which apparatus (1) comprises an irradiation device (6) adapted to generate the energy beam (9), wherein the irradiation device (6) comprises a beam guiding unit (8) that is adapted to guide the energy beam (9) in a build plane (5) in which build material (4) is applied, wherein the irradiation device (6) is adapted to generate at least one segmented track (11) comprising at least two first track segments (12) in which build material (4) is to be irradiated with the energy beam (9), wherein the beam guiding unit (8) is adapted to move at least one beam guiding element (10) in a continuous motion, comprising at least two first motion parts (17) and at least one second motion part (18) between the at least two first motion parts (17), wherein during each first motion part (17) the energy beam (9) is guided onto the build plane (5) and one first track segment (12) is generated, wherein the energy beam (9) is not guided onto the build plane (5) during the at least one second motion part (18).

## Description

The invention relates to an apparatus for additively manufacturing three-dimensional objects by means of successive layerwise selective irradiation and consolidation of layers of a build material which can be consolidated by means of an energy beam, which apparatus comprises an irradiation device adapted to generate the energy beam, wherein the irradiation device comprises a beam guiding unit that is adapted to guide the energy beam across a build plane in which build material is applied.

Apparatuses for additively manufacturing three-dimensional objects that comprise an irradiation device which is adapted to generate an energy beam, wherein the energy beam can be guided across a build plane via a corresponding beam guiding unit to selectively irradiate the build material applied in the build plane are generally known from prior art. Usually, the beam guiding unit comprises a movable element, such as a movable mirror, with which the beam can be guided to different positions or a long a defined beam path in the build plane, for instance.

Further, it is known from prior art that delays occur moving beam guiding units and regarding the movement of the energy beam, for example due to the inertia of various elements, such as movable mirrors, of the beam guiding unit. Thus, it is necessary to compensate the delays in that the energy beam being incident on the beam guiding element of the beam guiding unit is guided to the build plane at the correct time or for the correct duration, respectively. Hence, it is usually necessary to consider a delay when switching the energy beam on and off for guiding the energy beam to the beam guiding unit, respectively. Disadvantageously, when irradiating (writing) a segmented track that comprises multiple track segments, the beam guiding element has to be positioned for each of the track segments, wherein delays have to be considered for the movement of the beam guiding element for generating the movement of the energy beam for each track segment.

For example, a first delay a so-called "jump-delay" is to be considered for positioning the beam guiding element in that the energy beam reflected at the beam guiding element, i.e. guided via the beam guiding element, is incident on the starting point of a first track segment. Subsequently, a so-called "on-delay" has to be considered for taking the inertia for accelerating the beam guiding element into calculation. Accordingly, a so-called "off-delay" has to be considered at the end of the first track segment for a decelerating the beam guiding element. Therefore, various delays have to be added to the writing time, e.g. the time required to guide the energy beam over the corresponding track segment to irradiate the build material. In particular, as the segmented track may comprise a plurality of track segments, the various delays add up and therefore, may significantly increase the overall writing time and thereby the overall manufacturing time required to manufacture the three-dimensional object.

It is an object of the present invention to provide an apparatus for additively manufacturing three-dimensional objects, wherein the manufacturing time, in particular the writing time, is reduced.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device, as described before, which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to an apparatus for additively manufacturing three-dimensional objects with an irradiation device that comprises a beam guiding unit for guiding the energy beam across a build plane in which build material is layerwise applied. The invention is based on the idea that the irradiation device is adapted to generate at least one segmented track comprising at least two first track segments in which build material is to be irradiated with the energy beam, wherein the beam guiding unit is adapted to move at least one beam guiding element in a continuous motion, comprising at least two first motion parts and at least one second motion part between the at least two first motion parts, wherein during each first motion part the energy beam is guided onto the build plane and one first track segment is generated, wherein the energy beam is not guided onto the build plane during the at least one second motion part.

Thus, the irradiation device of the inventive apparatus is used to generate a segmented track. The segmented track describes the beam path along which the energy beam has to be guided to irradiate the build material and thereby consolidate the build material to additively build corresponding parts of the three-dimensional object. The segmented track comprises multiple track segments, namely at least two first track segments. Of course, a plurality of first track segments can be comprised in the segmented track. The first track segments of the segmented track therefore, define the track or the path along which the energy beam is guided in the build plane to irradiate the build material. As the segmented track is segmented into the first track segments, the first track segments may be spaced or "interrupted" in that between the first track segments build material is not irradiated. It is also possible to define "second track segments" that are arranged between the first track segments, wherein the energy beam can be guided along the segmented track comprising first track segments and second track segments, wherein build material is only irradiated in the first track segments. Thus, the energy beam is effectively not guided along the second track segments, as the energy beam is not incident on the build plane during those second track segments. Hence, the segmented track only comprises first track segments that are spaced apart from each other by (virtual) second track segments.

In other words, the segments of the segmented track are arranged in a sequence, namely between each two first track segments at least one second track segment, in particular exactly one second track segment, is arranged, in that each two first track segments comprised in the segmented track are "interrupted" by a second track segment between the first track segments. In other words, the segmented track preferably starts and ends with a first track segment, wherein a second track segment comes after the first of the first track segments. After the second track segment another first track segment is arranged and so on. As described before, the definition of the "second track segments" may be regarded as merely virtual, as the energy beam is not guided along the second track segments but the irradiation between two first track segments is paused or interrupted, as build material is not irradiated along those second track segments, but the second track segments virtually connect two first track segments of the segmented track.

According to the invention, the irradiation device comprises a beam guiding unit with a beam guiding element that is movable for generating the movement of the energy beam in the build plane. To generate the movement the beam guiding unit is adapted to move the at least one beam guiding element. Inventively, the beam guiding element is moved in a continuous motion which comprises at least two first motion parts and at least one a second motion part between the at least two first motion parts. During each first motion part the energy beam is guided onto the build plane and a first track segment is generated by irradiating the build material and the energy beam is not guided onto the build plane during the at least one second motion part. Thus, the beam guiding element is moved in a continuous motion generating the movement of the energy beam along the segmented track, wherein first motion parts of the continuous motion allow for generating the first track segments, whereas in the second motion parts the beam guiding element is moved without guiding the energy beam onto the build plane.

In other words, the beam guiding element is moved in a continuous motion comprising at least a first first motion part, at least one first second motion part and at least one second first motion part. During the first motion parts the energy beam is guided onto the build plane for irradiating the build material, i.e. generating a first track segment of the segmented track. During the second motion part that is arranged between the two first motion parts, the energy beam is not guided onto the build plane. Thus, the segmented track is generated by guiding the energy beam onto the beam guiding element and onto the build plane while the beam guiding element performs the first motion parts, wherein the energy beam is not guided onto build plane (onto the beam guiding element) while the beam guiding element performs the second motion parts. The selective guiding of the energy beam onto the build plane and moving the beam guiding element in a continuous motion allows for generating the segmented track in the build plane and therefore, irradiating (writing) the first track segments without the need for various delays.

Selectively guiding the energy beam only onto the beam guiding element or onto the build plane, respectively, during selected parts of the continuous motion of the beam guiding element allows for performing a continuous motion of the beam guiding element resulting in a non-continuous segmented track. As described before, the segmented track may be understood as comprising at least two first track segments in which build material is irradiated and which are connected via a virtual second track segment in which build material is not irradiated. The energy beam is guided along the segmented track by performing the continuous motion of the beam guiding element, wherein the energy beam is only guided onto the build plane to irradiate the first track segments during the first motion part and the energy beam is not guided onto the build plane during the second motion part. Thus, the first motion parts of the motion of the beam guiding element correspond to the first track segments of the segmented track and the second motion parts of the motion of the beam guiding element correspond to the (virtual) second track segments.

Compared to apparatuses that are known from prior art, only one delay at the start of the segmented track and at the end of the segmented track is necessary, wherein during the continuous motion of the beam guiding element no further delays have to be considered. Therefore, the manufacturing time that is required to additively manufacture the three-dimensional object can significantly be reduced, in particular regarding irradiation patterns comprising multiple segmented tracks with a plurality of first track segments.

According to a first embodiment of the inventive apparatus, the beam guiding unit may be adapted to move the beam guiding element in a motion pattern comprising multiple first motion parts, wherein the motion pattern comprises a second motion part between each two succeeding first motion parts. Thus, the beam guiding element may be moved in a motion pattern that comprises multiple first motion parts and multiple second motion parts, wherein the sequence of the first motion parts and the second motion parts is defined in that between each two first motion parts a second motion part is provided. For example, the beam guiding element is moved alternatingly along first motion parts and second motion parts, wherein the motion pattern preferably starts and ends with a first motion part.

Thus, corresponding to the motion pattern along which or based on which, respectively, the beam guiding element is moved, the segmented track can be irradiated into the build material arranged / applied in the build plane. Hence, the plurality of first track segments that are assigned to the segmented track can be irradiated / written into the build material applied in the build plane by selectively guiding the energy beam onto the build plane while the beam guiding element is continuously moved along the motion pattern comprising the corresponding first motion parts and second motion parts. As described before, the energy beam is only guided onto the build plane during the first motion parts to generate the first track segments and the energy beam is not guided onto the build plane during the second motion parts, as the second motion parts correspond to the (virtual) second track segments in which build material is not irradiated.

Advantageously, the irradiation device comprises a switch adapted to switch the energy beam for pulsing the energy beam and/or a shutter adapted to block the energy beam for pulsing the energy beam. As described before, the energy beam is selectively guided onto the build plane dependent on whether a first track segment or a second track segment is to be generated in the segmented track or whether the beam guiding element currently performs a first motion part or a second motion part of the motion of the beam guiding element. According to this embodiment, the irradiation device may comprise a switch, wherein the energy beam may be switched on and off for pulsing the energy beam in that the energy beam may be switched on during the first motion parts, wherein the energy beam is incident on the beam guiding element and therefore, guided onto the build plane. During the second motion parts the energy beam may be switched off and therefore, the energy beam is not guided onto the build plane during the second motion parts. It is also possible to have the irradiation device comprise a shutter that is adapted to selectively block the energy beam, wherein the energy beam may be blocked during the second motion parts (corresponding to the second track segments) and may be unblocked during the first motion parts and therefore, may be incident on the build plane to irradiate / generate the first track segments.

The term block / unblock may refer to a state of the shutter, wherein the energy beam may be guided along a corresponding beam guiding path onto the build plane, wherein the shutter may be arranged in an arbitrary position along the beam guiding path, for example in advance to the beam guiding element or after the beam guiding element, in particular between a beam source, such as a laser source, and the beam guiding element or between the beam guiding element and the build plane, for instance. Thus, the energy beam being blocked refers to a state of the shutter in which the energy beam cannot pass the shutter, whereas the energy beam being unblocked may refer to a state of the shutter being open and letting the energy beam pass the shutter to be incident on the build plane. The term "shutter" may refer to any arbitrary unit that is adapted to selectively absorb, reflect, deflect, filter or otherwise keep the energy beam from being incident on the (corresponding part of the) build plane.

The term "pulsing" may refer to the energy beam being switched on or unblocked and switched off or blocked, respectively, for a defined time period. Thus, a pulse width may be defined relating to the time required to move the energy beam along the first track segment and to irradiate the first track segment into the build material. Hence, a pulse width (pulse time) may define the time required for the beam guiding element performing the first motion part, e.g. to irradiate the first track segment. Also, a pulse width may be defined relating to the time required for the beam guiding element to perform the second motion part.

Further, the beam guiding unit may be adapted to move the beam guiding element, in particular a mirror element of the beam guiding unit, in a motion pattern, comprising at least one constant and/or a linear motion part, for generating a movement of the energy beam along the segmented track. The continuous movement of the beam guiding element, for example a movable, in particular pivotable mirror element, may comprise at least one constant and/or linear motion part during which the beam guiding element is moved from a first position into a second position. For example, the energy beam may be guided along a segmented track that comprises multiple first track segments arranged in a line in the build plane. Thus, the beam guiding element may be moved in a continuous constant and linear motion, wherein during first motion parts the energy beam is guided onto the beam guiding element and onto the build plane generating first track segments and wherein during second motion parts of the continuous constant and linear motion the energy beam is not guided onto the build plane, in particular not guided onto the beam guiding element. This allows for moving the beam guiding element in a constant and dependent on the required segmented track even linear motion pattern without the need for accelerating and decelerating the beam guiding element for each first track segment.

The irradiation device may further be adapted to control at least one pulse width for generating the at least one first track segment during which the energy beam is incident on the build plane, wherein the at least one pulse width matches at least one first track segment. As described before, during the first motion parts of the continuous motion the energy beam is guided onto the build plane to generate and irradiate the at least one first track segment. Thus, by adjusting the pulse width during which the energy beam is switched on or unblocked and therefore, incident on the beam guiding element and on the build plane, the length of the first track segment can be adjusted.

According to another embodiment of the inventive apparatus, at least two first motion parts and/or at least two second motion parts may differ in length. Thus, it is possible to define a segmented track that comprises a plurality of motion parts, in particular first motion parts and/or second motion parts that differ in length. Thus, it is possible to perform a desired irradiation pattern that is to be irradiated in the build plane to build or irradiate the cross section of the part of the object that is to be irradiated in the corresponding layer, by defining one or more segmented tracks with corresponding track segments. Thus, the irradiation pattern can be generated by continuously moving the beam guiding element for each segmented track comprising first motion parts and second motion parts that differ in length dependent on the required motion pattern.

The inventive apparatus may further be improved in that the irradiation device is adapted to adjust an on-delay and/or an off-delay, wherein the irradiation device is adapted to switch on the energy beam or unblock the energy beam after the on-delay and block or switch off the energy beam after the off-delay. As described before, due to mechanical properties of the beam guiding unit, in particular the beam guiding element, such as inertia and/or a time required to accelerate and decelerate the beam guiding element, it may be necessary that in advance to the first first motion part of a plurality of first motion parts assigned to the same segmented track an on-delay and after the last first motion part of the segmented track, an off-delay is provided to take the time required to accelerate and decelerate the beam guiding element into calculation.

Preferably, the segmented track comprises only one on-delay and/or only one off-delay. Thus, it is sufficient that the segmented track comprises only one on-delay and/or only one off-delay for generating the segmented track. Further, it is possible that the at least one first motion part and/or the at least one second motion part of the same segmented track is free of on-delays and off-delays. Thus, as described before, it is only necessary to have only one on-delay and only one off-delay for each segmented track, in particular at the beginning and the end of the corresponding motion pattern that is performed via the beam guiding element. Therefore, the first motion parts and the second motion parts of the motion pattern of the beam guiding element may be kept free of on-delays and off-delays, wherein it is advantageously possible that the time required for the on-delays and off-delays can be saved and the writing time and the overall manufacturing time can be reduced accordingly.

According to another embodiment of the inventive apparatus, the irradiation device may be adapted to irradiate build material to form a part of at least one support structure for supporting at least one section of the object, in particular a plurality of support structures arranged in a line. The term "support structure" may refer to any structure that is required or used to support a section of the object, such as support columns or support struts used to support delicate geometrical detail of the object, for instance an overhang. The support structures may, for example, be arranged equally distributed for a corresponding volume or section of the object, wherein multiple support structures may be arranged in a line allowing for laying a segmented track through the corresponding line to irradiate build material to form the support structures.

The at least one support structure, in particular the plurality of support structures, may comprise a cross-like or x- shaped cross section, wherein each support structure is built by irradiating two intersecting segmented tracks. Hence, as the support structures are preferably arranged in line, it is possible to define multiple segmented tracks that are intersecting, wherein each two segmented tracks preferably intersect in only one point. By having the at least two segmented tracks intersect, it is possible that the intersecting parts form the support structures, wherein each segmented track, as described before, comprises first track segments in which build material is irradiated. Thus, the first track segments of each segmented track define the area of build material in which build material is irradiated to build the support structures. Hence, each support structure is preferably built by irradiating two first track segments of two different segmented tracks. Thus, a grid-like shape in which support structures are arranged over the build plane can efficiently be irradiated into the build material by defining a grid of intersecting segmented tracks.

Besides, the invention relates to an irradiation device for an apparatus, in particular an inventive apparatus, as described before, which irradiation device comprises a beam guiding unit that is adapted to guide the energy beam in a build plane in which build material is applied, wherein the irradiation device is adapted to generate at least one segmented track comprising at least two first track segments in which build material is to be irradiated with the energy beam, wherein the beam guiding unit is adapted to move at least one beam guiding element in a continuous motion, comprising at least two first motion parts and at least one second motion part between the at least two first motion parts, wherein during each first motion part the energy beam is guided onto the build plane and one first track segment is generated, wherein the energy beam is not guided onto the build plane during the at least one second motion part.

Further, the invention relates to a method for operating at least one apparatus for additively manufacturing three-dimensional objects by means of successive layerwise selective irradiation and consolidation of layers of a build material which can be consolidated by means of an energy beam, in particular an inventive apparatus, as described before, wherein at least one segmented track comprising at least two first track segments in which build material is to be irradiated with the energy beam is generated, wherein at least one beam guiding element is moved in a continuous motion, comprising at least two first motion parts and at least one second motion part between the at least two first motion parts, wherein during each first motion part the energy beam is guided onto the build plane and one first track segment is generated, wherein the energy beam is not guided onto the build plane during the at least one second motion part.

Self-evidently, all features, details and advantages described with respect to the inventive apparatus are fully transferable to the inventive irradiation device and the inventive method.

Exemplary embodiments of the invention are described with reference to the Fig. The Fig. are schematic diagrams, wherein
- Fig. 1: shows an inventive apparatus in side view;
- Fig. 2: shows a build plane of the inventive apparatus of Fig. 1 in top view; and
- Fig. 3: shows a schematic diagram of the irradiation of an exemplary segmented track.

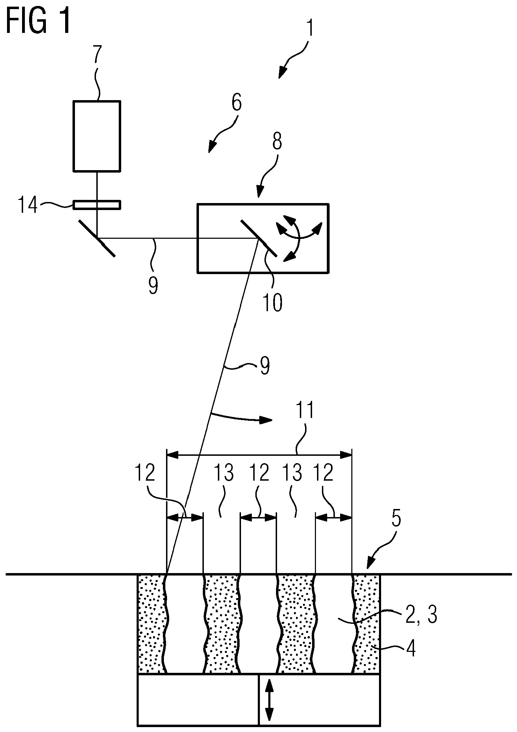

Fig. 1 shows an apparatus 1 for additively manufacturing three-dimensional objects 2, e.g. support structures 3 for supporting at least one section of an object 2, by selective irradiation and consolidation of layers of a build material 4 that is applied in a build plane 5. The apparatus 1 comprises an irradiation device 6 with a beam source 7, e.g. a laser source, and a beam guiding unit 8. The beam source 7 is adapted to generate an energy beam 9, such as a laser beam, that can be guided via the beam guiding unit 8 to the build plane 5 and across the build plane 5.

To guide the energy beam 9 across the build plane 5, the beam guiding unit 8 comprises one or more movable, in particular pivotable, beam guiding elements 10. In this exemplary embodiment, the beam guiding element 10 is built as a movable mirror. As can be derived from Fig. 1, the energy beam 9 being incident on the beam guiding element 10 is reflected onto the build plane 5 and moved across the build plane 5 dependent on a motion of the beam guiding element 10. Hence, an irradiation pattern can be irradiated into the build material 4 arranged in the build plane 5 by moving the beam guiding element 10. For example, it is possible to write a segmented track 11 into the build material 4 arranged in the build plane 5. The segmented track 11 according to this exemplary embodiment comprises three first track segments 12 in which build material 4 is to be irradiated to generate the object 2 or the support structures 3, respectively. The segmented track 11 further comprises "gaps" between the first track segments 12 that can be deemed as virtual second track segments 13, as no build material 4 is irradiated in the second track segments 13, but the second track segments 13 link the first track segments 12 to form the segmented track 11.

Thus, the irradiation device 6 comprises the beam guiding unit 8 which is adapted to move the beam guiding element 10 in a continuous motion, comprising first motion parts and second motion parts between the first motion parts, wherein during each first motion part the energy beam 9 is guided onto the build plane 5 and one first track segment 12 is generated, wherein the energy beam 9 is not guided onto the build plane 5 during the at least one second motion part (corresponding to the virtual second track segments 13).

In other words, the beam guiding unit 8 moves the beam guiding element 10 in a continuous motion pattern comprising the first motion parts and second motion parts, wherein during the first motion parts the first track segments 12 are irradiated into the build material 4 applied in the build plane 5 with the energy beam 9 being incident on the build plane 5 in the corresponding sections of the build plane 5 to form the object 2 and/or the support structures 3, whereas during the second motion parts the energy beam 9 is not incident on the build plane 5 and therefore, build material 4 is not irradiated in the (virtual) second track segments 13. In particular, the energy beam 9 may be guided along the segmented track 11, in particular along the first track segments 12 via a constant linear motion of the beam guiding element 10. Of course, any other arbitrary shaped segmented track, in particular comprising at least one curved section is also possible and the energy beam 9 can be moved accordingly with a corresponding motion pattern.

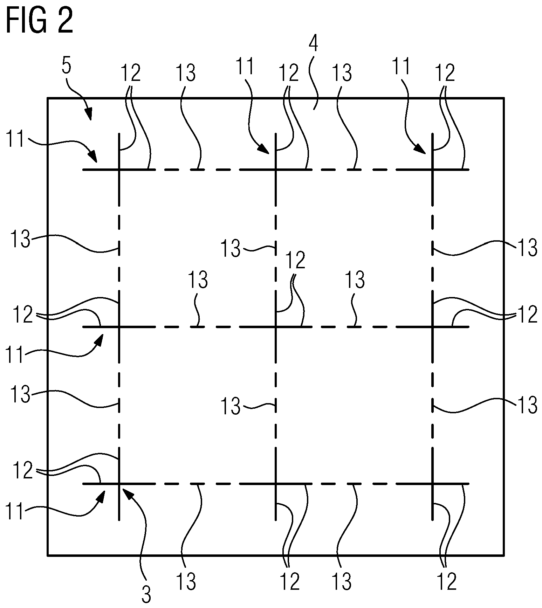

Fig. 2 shows the apparatus 1, in particular the build plane 5 in top view. As can be derived from Fig. 2 the irradiation pattern that is to be irradiated into the build material 4 applied in the build plane 5 comprises six segmented tracks 11 with three first track segments 12 and two second track segments 13 each. Thus, it is possible to build support structures 3 with x-shaped or cross-shaped cross section by defining the depicted grid of intersecting segmented tracks 11. As can be derived from Fig. 2, each support structure 3 is generated by two intersecting segmented tracks 11, in particular by two intersecting first track segments 12 of two different segmented tracks 11. Hence, for each segmented track 11 the energy beam 9 is guided onto the build plane 5 to irradiate the first track segments 12. For example, the apparatus 1 comprises a shutter 14 (or alternatively a switch) for pulsing the energy beam 9, in particular for selectively blocking and unblocking the energy beam 9 (Fig. 1).

In particular, in a blocked state the energy beam 9 cannot pass the shutter 14, whereas in an unblocked state the energy beam 9 can pass the shutter 14 to be incident on the beam guiding element 10 and therefore, on the build plane 5. Thus, to generate the segmented track 11 in the build plane 5, the beam guiding element 10 is moved in a continuous motion pattern comprising three first motion parts during which the first track segments 12 are irradiated. Hence, while the beam guiding element 10 is performing the continuous motion, the energy beam 9 is selectively blocked by the shutter 14 during the second motion parts (generating the virtual second track segments 13). Analogously, during the first motion parts the energy beam 9 is not blocked via the shutter 14 in that the energy beam 9 is incident on the beam guiding element 10 and on the build plane 5 to generate the first track segments 12.

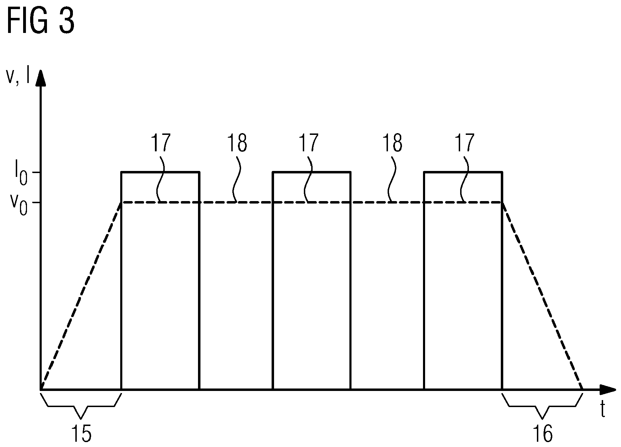

As can further be derived from Fig. 2, between each two first track segments 12 of the same segmented track 11, build material 4 is not irradiated thereby generating a virtual second track segment 13 linking two neighboring first track segments 12. Correspondingly, the motion pattern of the beam guiding element 10 comprises first motion parts that are linked with second motion parts or in other words, the motion that is performed by the beam guiding element 10 alternatingly comprises first motion parts and second motion parts, as will be described with respect to Fig. 3 below.

Fig. 3 shows an exemplary chart of the intensity I of the energy beam 9 and the moving speed v of the beam guiding element 10 over time t. As can be derived from Fig. 3, an on-delay 15 and an off-delay 16 can be added via the irradiation device 6 to the motion pattern performed by the beam guiding element 10. During the on-delay 15 the beam guiding element 10 is accelerated as can be derived from the chart, whereas during the off-delay 16 the beam guiding element 10 is decelerated.

The motion pattern that is exemplarily depicted in Fig. 3 shows the motion pattern according to which the beam guiding element 10 is moved to form one of the segmented tracks 11, as depicted in Fig. 2. Thus, the motion pattern comprises three first motion parts 17 and two second motion parts 18 for each segmented track 11. The intensity I of the energy beam 9 that is received in the build plane 5 therefore, is only present during the first motion parts 17 and no energy beam 9 is incident during the second motion parts 18. In other words, the beam guiding element 10 is accelerated to the velocity v₀ during the on-delay 15 and subsequently a continuous constant motion with velocity v₀ is performed by the beam guiding element 10. The continuous motion comprises three first motion parts 17 and two second motion parts 18, wherein a second motion part 18 is arranged between each two first motion parts 17. After the last motion part 17 the beam guiding element 10 is decelerated.

Accordingly, the irradiation device 6 controls the shutter 14 to allow the energy beam 9 to pass the shutter 14 or to allow the shutter 14 to unblock the energy beam 9, respectively, in that the energy beam 9 is incident on the build plane 5 during the first motion parts 17 to generate the first track segments 12. Hence, during the second motion parts 18 the shutter 14 blocks the energy beam 9 in that no energy beam 9 is received in the build plane 5 (generating the virtual second track segments 13). Thus, it is not necessary to provide on-delays 15 and off-delays 16 for each first track segment 12, but advantageously, the beam guiding unit 8 can move the beam guiding element 10 in a continuous motion allowing for the shutter 14 to block and unblock the energy beam 9 as the energy beam 9 is needed to irradiate the first track segments 12 in the build plane 5. As the various delays, such as on-delays 15, off-delays 16, jump-delays and the like can be reduced to only one on-delay 15, one off-delay 16 and one jump-delay for each segmented track 11, the writing time and the overall manufacturing time that is required to additively manufacture the three-dimensional object 2, in particular the support structures 3, can be reduced.

Of course, the inventive method can be performed on the inventive apparatus 1, preferably using an inventive irradiation device 6.

## Claims

1. Apparatus (1) for additively manufacturing three-dimensional objects (2) by means of successive layerwise selective irradiation and consolidation of layers of a build material (4) which can be consolidated by means of an energy beam (9), which apparatus (1) comprises an irradiation device (6) adapted to generate the energy beam (9), wherein the irradiation device (6) comprises a beam guiding unit (8) that is adapted to guide the energy beam (9) in a build plane (5) in which build material (4) is applied, **characterized in that** the irradiation device (6) is adapted to generate at least one segmented track (11) comprising at least two first track segments (12) in which build material (4) is to be irradiated with the energy beam (9), wherein the beam guiding unit (8) is adapted to move at least one beam guiding element (10) in a continuous motion, comprising at least two first motion parts (17) and at least one second motion part (18) between the at least two first motion parts (17), wherein during at least one, in particular each, first motion part (17) the energy beam (9) is guided onto the build plane (5) and one first track segment (12) is generated, wherein the energy beam (9) is not guided onto the build plane (5) during the at least one second motion part (18).

2. Apparatus according to claim 1, **characterized in that** the beam guiding unit (8) is adapted to move the beam guiding element (10) in a motion pattern comprising multiple first motion parts (17), wherein the motion pattern comprises a second motion part (18) between each two succeeding first motion parts (17).

3. Apparatus according to claim 1 or 2, **characterized in that** the irradiation device (6) comprises a switch adapted to switch the energy beam (9) for pulsing the energy beam (9) and/or a shutter (14) adapted to block the energy beam (9) for pulsing the energy beam (9).

4. Apparatus according to one of the preceding claims, **characterized in that** the beam guiding unit (8) is adapted to move the beam guiding element (10), in particular a mirror element of the beam guiding unit (8), in a motion pattern, comprising at least one constant and/or linear motion part, for generating a movement of the energy beam (9) along the segmented track (11).

5. Apparatus according to one of the preceding claims, **characterized in that** the irradiation device (6) is adapted to control at least one pulse width for generating the at least one first track segment (12) during which the energy beam (9) is incident on the build plane (5), wherein the at least one pulse width matches at least one first track segment (12).

6. Apparatus according to one of the preceding claims, **characterized in that** at least two first motion parts (17) and/or at least two second motion parts (18) differ in length.

7. Apparatus according to one of the preceding claims, **characterized in that** the irradiation device (6) is adapted to adjust an on-delay (15) and/or an off-delay (16), wherein the irradiation device (6) is adapted to switch on the energy beam (9) or unblock the energy beam (9) after the on-delay (15) and block or switch off the energy beam (9) after the off-delay (16).

8. Apparatus according to one of the preceding claims, **characterized in that** the at least one segmented track (11) comprises only one on-delay (15) and/or only one off-delay (16).

9. Apparatus according to one of the preceding claims, **characterized in that** the at least one first motion part (17) and/or the at least one second motion part (18) of the same segmented track (11) is free of on-delays (15) and off-delays (16).

10. Apparatus according to one of the preceding claims, **characterized in that** the irradiation device (6) is adapted to irradiate build material (4) to form a part of at least one support structure (3) for supporting at least one section of the object (2), in particular a plurality of support structures (3) arranged in a line.

11. Apparatus according to one of the preceding claims, **characterized in that** the at least one support structure (3), in particular the plurality of support structures (3), comprise a cross-like or x-shaped cross section, wherein each support structure (3) is built by irradiating two intersecting segmented tracks (11).

12. Irradiation device (6) for an apparatus (1), in particular an apparatus (1) according to one of the preceding, claims which irradiation device (6) comprises a beam guiding unit (8) that is adapted to guide the energy beam (9) in a build plane (5) in which build material (4) is applied, **characterized in that** the irradiation device (6) is adapted to generate at least one segmented track (11) comprising at least two first track segments (12) in which build material (4) is to be irradiated with the energy beam (9), wherein the beam guiding unit (8) is adapted to move at least one beam guiding element (10) in a continuous motion, comprising at least two first motion parts (17) and at least one second motion part (18) between the at least two first motion parts (17), wherein during at least one, in particular each, first motion part (17) the energy beam (9) is guided onto the build plane (5) and one first track segment (12) is generated, wherein the energy beam (9) is not guided onto the build plane (5) during the at least one second motion part (18).

13. Method for operating at least one apparatus (1) for additively manufacturing three-dimensional objects (2) by means of successive layerwise selective irradiation and consolidation of layers of a build material (4) which can be consolidated by means of an energy beam (9), in particular an apparatus (1) according to one of the claims 1 to 11, **characterized in that** at least one segmented track (11) comprising at least two first track segments (12) in which build material (4) is to be irradiated with the energy beam (9) is generated, wherein at least one beam guiding element (10) is moved in a continuous motion, comprising at least two first motion parts (17) and at least one second motion part (18) between the at least two first motion parts (17), wherein during at least one, in particular each, first motion part (17) the energy beam (9) is guided onto the build plane (5) and one first track segment (12) is generated, wherein the energy beam (9) is not guided onto the build plane (5) during the at least one second motion part (18).
